(19) Europäisches Patentamt / European Patent Office / Office européen des brevets

(11) **EP 4 760 844 A1**

(12) **EUROPEAN PATENT APPLICATION**
published in accordance with Art. 153(4) EPC

(43) Date of publication:
**17.06.2026 Bulletin 2026/25**

(21) Application number: **24859701.5**

(22) Date of filing: **26.08.2024**

(51) International Patent Classification (IPC):
*H01M 10/0525* (2010.01)    *H01G 11/26* (2013.01)
*H01G 11/52* (2013.01)    *H01M 4/13* (2010.01)
*H01M 4/133* (2010.01)    *H01M 50/491* (2021.01)

(52) Cooperative Patent Classification (CPC):
**H01G 11/26; H01G 11/52; H01M 4/13; H01M 4/133;
H01M 10/0525; H01M 50/491;** Y02E 60/10

(86) International application number:
**PCT/JP2024/030245**

(87) International publication number:
**WO 2025/047668 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.08.2023 JP 2023138420**

(71) Applicant: **GS Yuasa International Ltd.
Kisshoin, Minami-ku,
Kyoto-shi, Kyoto 601-8520 (JP)**

(72) Inventors:
• **FURUYA, Yasuyuki**
  **Kyoto-shi, Kyoto 601-8520 (JP)**
• **KAYANO, Tomohiro**
  **Kyoto-shi, Kyoto 601-8520 (JP)**
• **SOGO, Yasuhiro**
  **Kyoto-shi, Kyoto 601-8520 (JP)**

(74) Representative: **Isarpatent
Patent- und Rechtsanwälte Part G mbB
Friedrichstrasse 31
80801 München (DE)**

(54) **NONAQUEOUS ELECTROLYTE POWER STORAGE ELEMENT**

(57)    A non-aqueous electrolyte energy storage device according to one aspect of the present invention includes: a positive electrode having a positive electrode active material layer; a negative electrode having a metal negative electrode substrate and a negative electrode active material layer containing graphite; and a separator disposed between the positive electrode active material layer and the negative electrode active material layer, in which the separator has an air resistance of not less than 125 seconds/100 mL, and X represented by the following formula (1) is not more than 890.

$$X = PcTcTa/Pa \quad (1)$$

(In formula (1), Pc is a porosity (%) of the positive electrode active material layer, Tc is a thickness ($\mu$m) of the positive electrode active material layer, Pa is a porosity (%) of the negative electrode active material layer, and Ta is a thickness ($\mu$m) of the negative electrode active material layer.)

[ FIG. 1A ]

**Description**

TECHNICAL FIELD

The present invention relates to a non-aqueous electrolyte energy storage device.

BACKGROUND ART

Non-aqueous electrolyte secondary batteries typified by lithium-ion secondary batteries are widely used in electronic devices such as personal computers or communication terminals, automobiles, or the like because of their high energy density. In addition, capacitors such as lithium ion capacitors and electric double layer capacitors are also widely used as non-aqueous electrolyte energy storage devices other than non-aqueous electrolyte secondary batteries.

A non-aqueous electrolyte energy storage device generally includes an electrode body in which a positive electrode containing a positive electrode active material and a negative electrode containing a negative electrode active material are stacked with a separator interposed therebetween. Such an electrode body is housed in a container together with a non-aqueous electrolyte to constitute a non-aqueous electrolyte energy storage device. As the negative electrode active material, carbon materials such as graphite are widely used (refer to Patent Literature 1 and 2).

CITATION LIST

Patent Literature

Patent Literature 1: Japanese Unexamined Patent Application Publication No. 2005-222933
Patent Literature 2: Japanese Unexamined Patent Application Publication No. 2017-069039

DISCLOSURE OF INVENTION

PROBLEMS TO BE SOLVED BY THE INVENTION

Graphite, which is a negative electrode active material, undergoes a large change in expansion and contraction during charge and discharge. When the expansion of the negative electrode is large, a decrease in ionic conductivity or the like due to compression of the separator adjacent to the negative electrode is likely to occur. The decrease in ionic conductivity due to the compression of the separator may lead to a decrease in charge-discharge performance of the non-aqueous electrolyte energy storage device. In order to suppress such a phenomenon, in a non-aqueous electrolyte energy storage device in which graphite is used for the negative electrode, a separator having high air resistance, in which a decrease in ionic conductivity due to compression is unlikely to occur, may be used.

On the other hand, in general, in a non-aqueous electrolyte energy storage device, a discharge cutoff voltage is set, and in a normal usage mode, discharge is not performed beyond the discharge cutoff voltage once the discharge cutoff voltage is reached. However, if discharge is performed exceeding the discharge cutoff voltage due to use in a mode that is not normally foreseen, an overdischarge occurs, and heat generation or the like may occur. In particular, the inventors have found that in a non-aqueous electrolyte energy storage device in which a separator having high air resistance is used, heat generation is likely to occur during an overdischarge test under predetermined conditions.

An object of the present invention is to provide a non-aqueous electrolyte energy storage device in which heat generation during overdischarge is suppressed.

MEANS FOR SOLVING THE PROBLEMS

A non-aqueous electrolyte energy storage device according to one aspect of the present invention includes: a positive electrode having a positive electrode active material layer; a negative electrode having a metal negative electrode substrate and a negative electrode active material layer containing graphite; and a separator disposed between the positive electrode active material layer and the negative electrode active material layer, in which the separator has an air resistance of not less than 125 seconds/100 mL, and X represented by the following formula (1) is not more than 890.

$$X = P_c T_c T_a / P_a \ (1)$$

(In formula (1), Pc is a porosity (%) of the positive electrode active material layer, Tc is a thickness ($\mu$m) of the positive electrode active material layer, Pa is a porosity (%) of the negative electrode active material layer, and Ta is a thickness ($\mu$m) of the negative electrode active material layer.)

EFFECT OF THE INVENTION

According to one aspect of the present invention, it is possible to provide a non-aqueous electrolyte energy storage device in which heat generation during overdischarge is suppressed.

BRIEF DESCRIPTION OF DRAWINGS

[FIG. 1A] FIG. 1A is a first schematic diagram for explaining a phenomenon that occurs when a non-aqueous electrolyte energy storage device is brought into an overdischarged state.
[FIG. 1B] FIG. 1B is a second schematic diagram for explaining a phenomenon that occurs when a non-aqueous electrolyte energy storage device is brought into an overdischarged state.
[FIG. 1C] FIG. 1C is a third schematic diagram for explaining a phenomenon that occurs when a non-aqueous electrolyte energy storage device is brought into an overdischarged state.
[FIG. 2] FIG. 2 is a see-through perspective view illustrating an embodiment of a non-aqueous electrolyte energy storage device.
[FIG. 3] FIG. 3 is a schematic view illustrating an embodiment of an energy storage apparatus which is configured by assembling a plurality of non-aqueous electrolyte energy storage devices.

DESCRIPTION OF EMBODIMENTS

First, an outline of a non-aqueous electrolyte energy storage device disclosed in the present specification will be described.

[1] A non-aqueous electrolyte energy storage device according to one aspect of the present invention includes: a positive electrode having a positive electrode active material layer; a negative electrode having a metal negative electrode substrate and a negative electrode active material layer containing graphite; and a separator disposed between the positive electrode active material layer and the negative electrode active material layer, in which the separator has an air resistance of not less than 125 seconds/100 mL, and X represented by the following formula (1) is not more than 890.

$$X = PcTcTa/Pa \ (1)$$

(In formula (1), Pc is a porosity (%) of the positive electrode active material layer, Tc is a thickness ($\mu$m) of the positive electrode active material layer, Pa is a porosity (%) of the negative electrode active material layer, and Ta is a thickness ($\mu$m) of the negative electrode active material layer.)

In the non-aqueous electrolyte energy storage device described in the above [1], heat generation during overdischarge is suppressed. Although the reason for this is not certain, the following reason is presumed.

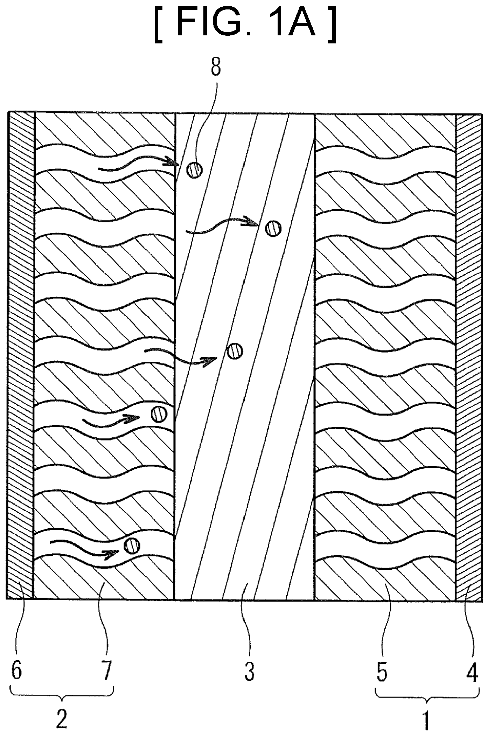

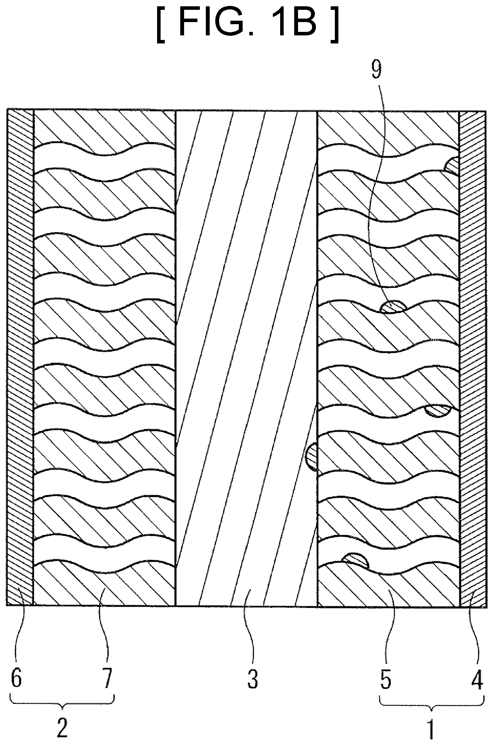

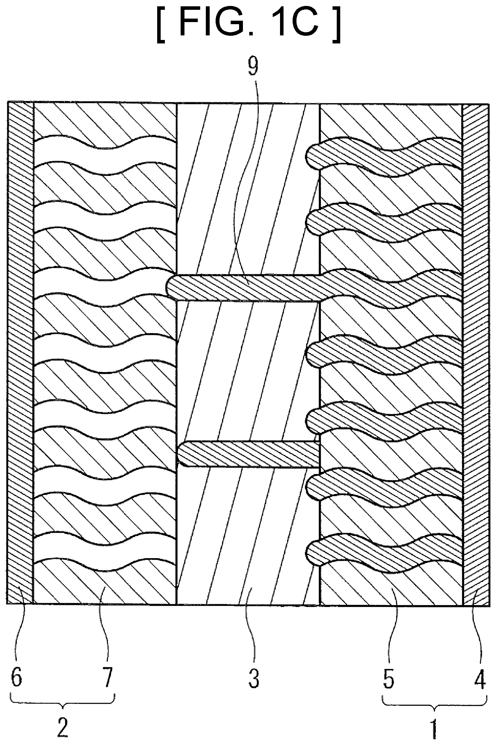

A phenomenon that occurs when a non-aqueous electrolyte energy storage device that has reached a discharge cutoff voltage is discharged exceeding the discharge cutoff voltage into an overdischarged state will be described with reference to FIGS. 1A to 1C. The non-aqueous electrolyte energy storage device schematically illustrated in FIGS. 1A to 1C has a positive electrode 1, a negative electrode 2, and a separator 3. The positive electrode 1 has a positive electrode substrate 4 and a positive electrode active material layer 5. The negative electrode 2 has a negative electrode substrate 6 and a negative electrode active material layer 7. The separator 3, the positive electrode active material layer 5, and the negative electrode active material layer 7 are all porous, and are impregnated with a non-aqueous electrolyte, which is not illustrated. When an overdischarged state is reached, the potential of the negative electrode rises, whereby a metal constituting the negative electrode substrate 6 becomes metal ions 8 and is eluted (see FIG. 1A). The metal ions 8 eluted from the negative electrode substrate 6 permeate through the separator 3 and precipitate as metal 9 on the positive electrode 1 (on the surface of the positive electrode substrate 4, on the surface or inside the pores of the positive electrode active material layer 5, etc.) (see FIG. 1B). The metal 9 precipitated on the positive electrode 1 grows and penetrates through the separator 3 to come into contact with the negative electrode 2, thereby causing an internal short circuit (see FIG. 1C). Here, if the time it takes for the internal short circuit to occur is long, the temperature inside the non-aqueous electrolyte energy storage device continues to rise due to Joule heat caused by energization, and may reach, for example, 140°C or higher. In particular, when the air resistance of the separator 3 is high, the metal ions 8 eluted from the negative electrode substrate 6 are less likely to permeate through the separator 3, and the metal 9 precipitated on the positive electrode 1 is less likely to penetrate through the separator 3, and therefore, an internal short circuit takes a long time to occur, and a rise in temperature is likely to continue.

Here, if the porosity (Pa) of the negative electrode active material layer 7 is high and the thickness (Ta) of the negative electrode active material layer 7 is small, the metal ions 8 eluted from the negative electrode substrate 6 easily permeate through the negative electrode active material layer 7, and therefore, the time it takes for the metal ions 8 to reach the positive electrode 1 is shortened. Furthermore, if the porosity (Pc) of the positive electrode active material layer 5 is low and the thickness (Tc) of the positive electrode active material layer 5 is small, the inside of the pores of the positive electrode active material layer 5 is easily filled with the precipitated metal 9, and the metal 9 is easily precipitated on the surface of the positive electrode substrate 4 or the positive electrode active material layer 5. Therefore, the speed at which the metal 9 that is being precipitated grows from the surface of the positive electrode substrate 4 or the positive electrode active material layer 5 toward the negative electrode 2 increases. That is, it is considered that the smaller the value of X (= PcTcTa/Pa) represented by the above formula (1), the shorter the time it takes for the internal short circuit to occur. In the non-aqueous electrolyte energy storage device described in the above [1], since X represented by the above formula (1) is not more than 890, an internal short circuit is likely to occur in a short time during overdischarge, and it is presumed that heat generation is suppressed.

"Graphite" refers to a carbon material having an average lattice plane spacing ($d_{002}$) of a (002) plane determined by an X-ray diffraction method of not less than 0.33 nm and less than 0.34 nm before charge-discharge or in a discharged state. Here, the "discharged state" of the carbon material means a state in which the carbon material serving as a negative electrode active material is discharged such that charge carrier ions capable of being absorbed and released during charge and discharge are sufficiently released from the carbon material. For example, in a half cell using, as a working electrode, a negative electrode containing a carbon material as a negative electrode active material and using metal lithium as a counter electrode, it is a state in which an open circuit voltage is not less than 0.6 V.

"Air resistance" is a value measured by a "Gurley tester method" in accordance with JIS-P-8117 (2009). A size of a test piece of the separator used for measurement is 50 mm × 50 mm. Further, "air resistance" refers to an average value of air resistance measured on five test pieces of the separator. The air resistance of the separator included in the non-aqueous electrolyte energy storage device is measured using a separator obtained from the non-aqueous electrolyte energy storage device disassembled by the following method. First, after the non-aqueous electrolyte energy storage device is discharged to a discharged state (a state of the non-aqueous electrolyte energy storage device when the device is subjected to constant current discharge at a current of 0.1 C to a discharge cutoff voltage during normal use), the non-aqueous electrolyte energy storage device is disassembled in a dry atmosphere. Next, the separator is taken out, washed with hydrochloric acid having a concentration of 36% by mass, further washed with deionized water, and then vacuum-dried at room temperature for 10 hours or more. Thereafter, the vacuum-dried separator is cut out to obtain a test piece.

The "porosity" of an active material layer (the positive electrode active material layer and the negative electrode active material layer) is determined by a calculation formula of (1 - V2/V1) x 100, where V1 is an apparent volume (volume including voids) of the active material layer and V2 is a sum of true volumes of respective materials constituting the active material layer. The apparent volume V1 of the active material layer can be calculated as a product of an area of the active material layer and a thickness of the active material layer. The sum V2 of the true volumes of the respective materials constituting the active material layer can be calculated from the content of each material in the active material layer and the true density of each material.

The "thickness" of the active material layer refers to a thickness of one active material layer. For example, when the positive electrode has a positive electrode substrate and positive electrode active material layers are provided on both surfaces of the positive electrode substrate respectively, the thickness of the positive electrode active material layer is the thickness of the positive electrode active material layer on one surface. Further, the "thickness" of the active material layer refers to an average value of thicknesses measured at arbitrary 10 points of the active material layer.

The "porosity" and "thickness" of the active material layer are values in a state before charge-discharge or in a discharged state of the non-aqueous electrolyte energy storage device (a state of the non-aqueous electrolyte energy storage device when the device is subjected to constant current discharge at a current of 0.1 C to a discharge cutoff voltage during normal use). Here, "during normal use" is a case in which the non-aqueous electrolyte energy storage device is used by adopting charge-discharge conditions recommended or specified for the non-aqueous electrolyte energy storage device.

[2] In the non-aqueous electrolyte energy storage device described in the above [1], the Pc may be not less than 30% and not more than 45%, the Tc may be not less than 20 $\mu$m and not more than 35 $\mu$m, the Pa may be not less than 40% and not more than 55%, and the Ta may be not less than 30 $\mu$m and not more than 45 $\mu$m.

In the non-aqueous electrolyte energy storage device described in the above [2], the effect that heat generation during overdischarge is suppressed can be exhibited particularly sufficiently.

[3] In the non-aqueous electrolyte energy storage device described in the above [1] or [2], the separator may have an air resistance of not less than 140 seconds/100 mL.

Generally, it is considered that the higher the air resistance of the separator, the more likely heat generation occurs during an overdischarge test under predetermined conditions. Therefore, in the non-aqueous electrolyte energy storage device described in the above [3], the technical significance of applying the present invention in which heat generation during overdischarge is suppressed is great. Moreover, in the non-aqueous electrolyte energy storage device described in the above [3], since a decrease in ionic conductivity due to compression of the separator is particularly unlikely to occur, good charge-discharge performance can be exhibited in the non-aqueous electrolyte energy storage device in which graphite is used as the negative electrode active material.

[4] In the non-aqueous electrolyte energy storage device described in any one of the above [1] to [3], the X may be not less than 500 and not more than 890.

In the non-aqueous electrolyte energy storage device described in the above [4], since the electrode is unlikely to curve in an electrode manufacturing process (for example, a pressing process), a high-quality non-aqueous electrolyte energy storage device can be obtained.

Hereinafter, a non-aqueous electrolyte energy storage device, an energy storage apparatus, a method for manufacturing a non-aqueous electrolyte energy storage device according to an embodiment of the present invention, and other embodiments will be described in detail. Note that names of respective constituent members (respective constituent elements) used in the embodiments may be different from names of respective constituent members (respective constituent elements) used in the background art.

<Non-aqueous Electrolyte Energy Storage Device>

A non-aqueous electrolyte energy storage device (hereinafter, also simply referred to as an "energy storage device") according to an embodiment of the present invention includes: an electrode body having a positive electrode, a negative electrode, and a separator; a non-aqueous electrolyte; and a container for housing the electrode body and the non-aqueous electrolyte. The electrode body is usually of a stacked type in which a plurality of positive electrodes and a plurality of negative electrodes are stacked with separators interposed therebetween, or of a wound type in which a positive electrode and a negative electrode are wound in a state of being stacked with a separator interposed therebetween. At least a part of the non-aqueous electrolyte exists in a state of being impregnated in the positive electrode, the negative electrode, and the separator. As an example of the non-aqueous electrolyte energy storage device, a non-aqueous electrolyte secondary battery (hereinafter, also simply referred to as a "secondary battery") will be described.

(Positive Electrode)

The positive electrode has a positive electrode substrate and a positive electrode active material layer disposed on the positive electrode substrate directly or via an intermediate layer.

The positive electrode substrate has conductivity. Whether or not it has "conductivity" is determined with a volume resistivity of $10^{-2}$ $\Omega\cdot$cm measured in accordance with JIS-H-0505 (1975) as a threshold value. As a material of the positive electrode substrate, a metal such as aluminum, titanium, tantalum, or stainless steel, or an alloy thereof is used. Among these, aluminum or an aluminum alloy is preferable from the viewpoints of potential resistance, high conductivity, and cost. Examples of the positive electrode substrate include a foil, a vapor-deposited film, a mesh, and a porous material, and a foil is preferable from the viewpoint of cost. Therefore, an aluminum foil or an aluminum alloy foil is preferable as the positive electrode substrate. Examples of aluminum or the aluminum alloy include A1085, A3003, A1N30, and the like specified in JIS-H-4000 (2014) or JIS-H-4160 (2006).

An average thickness of the positive electrode substrate is preferably not less than 3 $\mu$m and not more than 50 $\mu$m, more preferably not less than 5 $\mu$m and not more than 40 $\mu$m, still more preferably not less than 8 $\mu$m and not more than 30 $\mu$m, and particularly preferably not less than 10 $\mu$m and not more than 25 $\mu$m. By setting the average thickness of the positive electrode substrate within the above range, it is possible to increase energy density per volume of the non-aqueous electrolyte energy storage device while increasing the strength of the positive electrode substrate.

The intermediate layer is a layer disposed between the positive electrode substrate and the positive electrode active material layer. The intermediate layer reduces contact resistance between the positive electrode substrate and the positive electrode active material layer by containing a conductive agent such as carbon particles. The configuration of the intermediate layer is not particularly limited, and includes, for example, a binder and a conductive agent.

The positive electrode active material layer contains a positive electrode active material. The positive electrode active material layer contains optional components such as a conductive agent, a binder, a thickener, and a filler as necessary.

The positive electrode active material can be appropriately selected from known positive electrode active materials. As a positive electrode active material for a lithium-ion secondary battery, a material capable of absorbing and releasing lithium ions is usually used. Examples of the positive electrode active material include lithium transition metal composite oxides having an $\alpha$-NaFeO$_2$-type crystal structure, lithium transition metal composite oxides having a spinel type crystal structure, polyanion compounds, chalcogen compounds, sulfur, and the like. Examples of the lithium transition metal composite oxides having an $\alpha$-NaFeO$_2$-type crystal structure include Li[Li$_x$Ni$_{(1-x)}$]O$_2$ ($0 \leq x < 0.5$), Li[Li$_x$Ni$_\gamma$Co$_{(1-x-\gamma)}$]O$_2$ ($0 \leq x < 0.5$, $0 < \gamma < 1$, $0 < 1-x-\gamma$), Li[Li$_x$Co$_{(1-x)}$]O$_2$ ($0 \leq x < 0.5$), Li[Li$_x$Ni$_\gamma$Mn$_{(1-x-\gamma)}$]O$_2$ ($0 \leq x < 0.5$, $0 < \gamma < 1$, $0 < 1-x-\gamma$), Li[Li$_x$Ni$_\gamma$Mn$_\beta$Co$_{(1-x-\gamma-\beta)}$]O$_2$ ($0 \leq x < 0.5$, $0 < \gamma$, $0 < \beta$, $0.5 < \gamma+\beta < 1$, $0 < 1-x-\gamma-\beta$), Li[Li$_x$Ni$_\gamma$Co$_\beta$Al$_{(1-x-\gamma-\beta)}$]O$_2$ ($0 \leq x < 0.5$, $0 < \gamma$, $0 < \beta$, $0.5 < \gamma+\beta < 1$, $0 < 1-x-\gamma-\beta$), and the like. Examples of the lithium transition metal composite oxides having a spinel type crystal structure include Li$_x$Mn$_2$O$_4$, Li$_x$Ni$_\gamma$Mn$_{(2-\gamma)}$O$_4$, and the like. Examples of the polyanion compounds include LiFePO$_4$, LiMnPO$_4$, LiNiPO$_4$, LiCoPO$_4$, Li$_3$V$_2$(PO$_4$)$_3$, Li$_2$MnSiO$_4$, and Li$_2$CoPO$_4$F, and the like. Examples of the chalcogen compounds include titanium disulfide, molybdenum disulfide, molybdenum dioxide, and the like. Atoms or polyanions in these materials may be partially substituted with atoms or anion species composed of other elements. The surfaces of these materials may be coated with other materials. In the positive electrode active material layer, one of these materials may be used alone, or two or more of these materials may be used in combination.

The positive electrode active material is usually in the form of particles (powder). An average particle size of the positive electrode active material is preferably, for example, not less than 0.1 $\mu$m and not more than 20 $\mu$m. By setting the average particle size of the positive electrode active material to be not less than the above lower limit, manufacture or handling of the positive electrode active material becomes easy. By setting the average particle size of the positive electrode active material to be not more than the above upper limit, electron conductivity of the positive electrode active material layer is improved. Note that when a composite of the positive electrode active material and another material is used, an average particle size of the composite is regarded as the average particle size of the positive electrode active material. "Average particle size" means a value at which a volume-based cumulative distribution calculated in accordance with JIS-Z-8819-2 (2001) is 50% based on a particle size distribution measured by a laser diffraction/scattering method for a diluted solution obtained by diluting particles with a solvent in accordance with JIS-Z-8825 (2013).

In order to obtain a powder having a predetermined particle size, a pulverizer, a classifier, or the like is used. Examples of a pulverization method include methods using a mortar, a ball mill, a sand mill, a vibration ball mill, a planetary ball mill, a jet mill, a counter jet mill, a swirling airflow type jet mill, a sieve, or the like. At the time of pulverization, wet pulverization in which water or an organic solvent such as hexane coexists can also be used. As a classification method, a sieve, a wind force classifier, or the like is used as necessary in both dry type and wet type.

The content of the positive electrode active material in the positive electrode active material layer is preferably not less than 50% by mass and not more than 99% by mass, more preferably not less than 70% by mass and not more than 98% by mass, and still more preferably not less than 80% by mass and not more than 95% by mass. By setting the content of the positive electrode active material within the above range, it is possible to achieve both high energy density and manufacturability of the positive electrode active material layer.

The conductive agent is not particularly limited as long as it is a material having conductivity. Examples of such a conductive agent include carbon materials, metals, conductive ceramics, and the like. Examples of the carbon materials include graphite, non-graphitic carbon, graphene-based carbon, and the like. Examples of the non-graphitic carbon include carbon nanofibers, pitch-based carbon fibers, carbon black, and the like. Examples of the carbon black include furnace black, acetylene black, Ketjen black, and the like. Examples of the graphene-based carbon include graphene, carbon nanotubes (CNTs), fullerenes, and the like. Examples of the form of the conductive agent include a powder form, a fibrous form, and the like. As the conductive agent, one of these materials may be used alone, or two or more of these materials may be used in combination. Also, these materials may be used as a composite. For example, a material obtained by compounding carbon black and CNTs may be used. Among these, carbon black is preferable from the viewpoints of electron conductivity and coatability, and among them, acetylene black is preferable.

The content of the conductive agent in the positive electrode active material layer is preferably not less than 1% by mass and not more than 10% by mass, and more preferably not less than 3% by mass and not more than 9% by mass. By setting the content of the conductive agent within the above range, the energy density of the non-aqueous electrolyte energy storage device can be increased.

Examples of the binder include: thermoplastic resins such as fluororesins (polytetrafluoroethylene (PTFE), polyvinylidene fluoride (PVDF), etc.), polyethylene, polypropylene, polyacryl, and polyimide; elastomers such as ethylene-propylene-diene rubber (EPDM), sulfonated EPDM, styrene butadiene rubber (SBR), and fluororubber; polysaccharide polymers; and the like.

The content of the binder in the positive electrode active material layer is preferably not less than 1% by mass and not more than 10% by mass, and more preferably not less than 2% by mass and not more than 6% by mass. By setting the content of the binder within the above range, the positive electrode active material can be stably held.

Examples of the thickener include polysaccharide polymers such as carboxymethyl cellulose (CMC) and methyl cellulose. When the thickener has a functional group that reacts with lithium or the like, this functional group may be deactivated in advance by methylation or the like.

The content of the thickener in the positive electrode active material layer may be, for example, not less than 0.1% by mass and not more than 6% by mass, or may be not less than 0.5% by mass and not more than 3% by mass. The content of the thickener in the positive electrode active material layer may be not more than 1% by mass, and the thickener may not be contained in the positive electrode active material layer.

The filler is not particularly limited. Examples of the filler include: polyolefins such as polypropylene and polyethylene; inorganic oxides such as silicon dioxide, alumina, titanium dioxide, calcium oxide, strontium oxide, barium oxide, magnesium oxide, and aluminosilicate; hydroxides such as magnesium hydroxide, calcium hydroxide, and aluminum hydroxide; carbonates such as calcium carbonate; poorly soluble ionic crystals such as calcium fluoride, barium fluoride, and barium sulfate; nitrides such as aluminum nitride and silicon nitride; and substances derived from mineral resources such as talc, montmorillonite, boehmite, zeolite, apatite, kaolin, mullite, spinel, olivine, sericite, bentonite, and mica, or artificial products thereof, and the like.

The content of the filler in the positive electrode active material layer may be, for example, not less than 0.1% by mass and not more than 8% by mass, or may be not less than 0.5% by mass and not more than 5% by mass. The content of the filler in the positive electrode active material layer may be not more than 3% by mass, or may be not more than 1% by mass, and the filler may not be contained in the positive electrode active material layer.

The positive electrode active material layer may contain typical nonmetal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, and Nb as components other than the positive electrode active material, the conductive agent, the binder, the thickener, and the filler.

The lower limit of the porosity (Pc) of the positive electrode active material layer can be, for example, 20%, but is preferably 30%. The lower limit of Pc may be 32%, 36%, or 40%. By setting Pc to be not less than the above lower limit, reaction area in the positive electrode active material layer becomes sufficiently large, and output performance and the like tend to improve. The upper limit of Pc can be, for example, 60%, but is preferably 45%. The upper limit of Pc may be 43% or 40%. By setting Pc to be not more than the above upper limit, heat generation during overdischarge can be further suppressed. Pc can be within a range obtained by combining any of the above lower limits and any of the above lower limits (provided that the lower limit is smaller than the upper limit). The porosity (Pc) of the positive electrode active material layer can be adjusted by, for example, the particle size of the positive electrode active material, the pressing pressure on the positive electrode active material layer when producing the positive electrode, and the like.

The lower limit of the thickness (Tc) of the positive electrode active material layer can be, for example, 10 $\mu$m, but is preferably 20 $\mu$m, and more preferably 24 $\mu$m. By setting Tc to be not less than the above lower limit, the energy density per volume of the non-aqueous electrolyte energy storage device can be increased. The upper limit of Tc can be, for example, 50 $\mu$m, but is preferably 35 $\mu$m, more preferably 32 $\mu$m, and may be 28 $\mu$m. By setting Tc to be not more than the above upper limit, heat generation during overdischarge can be further suppressed. Tc can be within a range obtained by combining any of the above lower limits and any of the above lower limits.

The product of the porosity (Pc) of the positive electrode active material layer and the thickness (Tc) of the positive electrode active material layer (i.e., PcTc) is not particularly limited, but the upper limit of PcTc may be 1500, and may be 1400, 1300, 1200, or 1100. When X is not more than the above upper limit, an internal short circuit is likely to occur early during overdischarge, and heat generation tends to be further suppressed. The lower limit of PcTc may be, for example, 500, and may be 600, 700, 800, or 900. When PcTc is not less than the above lower limit, the positive electrode is unlikely to curve in the positive electrode manufacturing process (for example, a pressing process), and a high-quality positive electrode tends to be obtained. PcTc can be within a range obtained by combining any of the above lower limits and any of the above lower limits.

The positive electrode can be produced, for example, by applying a positive electrode mixture paste to the positive electrode substrate directly or via an intermediate layer, and drying the paste. After drying, pressing or the like may be performed as necessary. The positive electrode mixture paste contains respective components constituting the positive electrode active material layer, such as the positive electrode active material and a binder which is an optional component. The positive electrode mixture paste usually further contains a dispersion medium.

(Negative Electrode)

The negative electrode has a negative electrode substrate and a negative electrode active material layer disposed on the negative electrode substrate directly or via an intermediate layer. The configuration of the intermediate layer is not particularly limited, and can be selected, for example, from the configurations exemplified for the positive electrode described above.

The negative electrode substrate is made of metal and has conductivity. Specific examples of the material of the negative electrode substrate include metals such as copper, nickel, stainless steel, and nickel-plated steel, or alloys thereof. Among these, copper or a copper alloy is preferable from the viewpoint of high conductivity. When a negative electrode substrate made of copper or a copper alloy is used, elution of copper ions usually occurs at a potential of not less than about 3.5 V vs. Li/Li$^+$. That is, in a non-aqueous electrolyte energy storage device in which graphite is used as the negative electrode active material and a negative electrode substrate made of copper or a copper alloy is used, copper ions are likely to be eluted from the negative electrode substrate as the negative electrode potential reaches a potential of not less than about 3.5 V vs. Li/Li$^+$ due to overdischarge. Therefore, when the non-aqueous electrolyte energy storage device according to an embodiment of the present invention has a negative electrode substrate made of copper or a copper alloy, the effect of the present invention that heat generation is suppressed by causing an internal short circuit to occur early during overdischarge is particularly sufficiently achieved. Examples of the negative electrode substrate include a foil, a vapor-deposited film, a mesh, and a porous material, and a foil is preferable from the viewpoint of cost. Therefore, a copper foil or a copper alloy foil is preferable as the negative electrode substrate. Examples of the copper foil include rolled copper foil, electrolytic copper foil, and the like.

An average thickness of the negative electrode substrate is preferably not less than 2 $\mu$m and not more than 35 $\mu$m, more preferably not less than 3 $\mu$m and not more than 30 $\mu$m, still more preferably not less than 4 $\mu$m and not more than 25 $\mu$m, and particularly preferably not less than 5 $\mu$m and not more than 20 $\mu$m. By setting the average thickness of the negative electrode substrate within the above range, it is possible to increase the energy density per volume of the non-aqueous electrolyte energy storage device while increasing the strength of the negative electrode substrate.

The negative electrode active material layer contains graphite. The negative electrode active material layer contains optional components such as a negative electrode active material other than graphite, a conductive agent, a binder, a thickener, and a filler as necessary.

Graphite is a component that functions as a negative electrode active material.

Examples of the graphite include natural graphite and artificial graphite. From the viewpoint of being able to obtain a material with stable physical properties, artificial graphite is preferable. From the viewpoint of output performance and the like, natural graphite may be preferable in some cases.

Graphite is usually in particulate form. The average particle size of graphite is preferably, for example, not less than 1 $\mu$m and not more than 30 $\mu$m, more preferably not less than 2 $\mu$m and not more than 20 $\mu$m, and still more preferably not less than 4 $\mu$m and not more than 12 $\mu$m. By setting the average particle size of the negative electrode active material to be not less than the above lower limit, manufacture or handling of the negative electrode active material becomes easy. By setting the average particle size of the negative electrode active material to be not more than the above upper limit, electron conductivity of the negative electrode active material layer is improved. In order to obtain a powder having a predetermined particle size, a pulverizer, a classifier, or the like is used. The pulverization method and the classification method can be selected, for example, from the methods exemplified for the positive electrode described above.

The content of graphite in the negative electrode active material layer is preferably not less than 60% by mass and not more than 99.6% by mass, and more preferably not less than 90% by mass and not more than 99% by mass. The content of graphite in the negative electrode active material layer may be not less than 93% by mass or not less than 96% by mass. By setting the content of graphite within the above range, it is possible to achieve both high energy density and manufacturability of the negative electrode active material layer.

The negative electrode active material layer may contain another negative electrode active material other than graphite. Examples of the other negative electrode active material include: non-graphitic carbon; metal lithium; metals or metalloids such as Si and Sn; metal oxides or metalloid oxides such as Si oxide, Ti oxide, and Sn oxide; titanium-containing oxides such as $Li_4Ti_5O_{12}$, $LiTiO_2$, and $TiNb_2O_7$; polyphosphoric acid compounds; silicon carbide; and the like. The content of graphite with respect to all negative electrode active materials may be not less than 80% by mass, and may be not less than 90% by mass, not less than 99% by mass, not less than 99.9% by mass, or 100% by mass.

The content of the conductive agent in the negative electrode active material layer can be, for example, not less than 0.1% by mass and not more than 5% by mass. The content of the conductive agent in the negative electrode active material layer may be not more than 3% by mass or not more than 1% by mass, and the conductive agent may not be contained in the negative electrode active material layer.

The content of the binder in the negative electrode active material layer is preferably not less than 0.5% by mass and not more than 5% by mass, and more preferably not less than 0.8% by mass and not more than 3% by mass. By setting the content of the binder within the above range, graphite and the like can be stably held.

The content of the thickener in the negative electrode active material layer is preferably, for example, not less than 0.1% by mass and not more than 6% by mass, and more preferably not less than 0.5% by mass and not more than 3% by mass.

The content of the filler in the negative electrode active material layer may be, for example, not less than 0.1% by mass and not more than 8% by mass, or may be not less than 0.5% by mass and not more than 5% by mass. The content of the filler in the negative electrode active material layer may be not more than 3% by mass, or may be not more than 1% by mass, and the filler may not be contained in the negative electrode active material layer.

The negative electrode active material layer may contain typical nonmetal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Ta, Hf, Nb, and W as components other than the negative electrode active material, the conductive agent, the binder, the thickener, and the filler.

The lower limit of the porosity (Pa) of the negative electrode active material layer can be, for example, 30%, but is preferably 40%, more preferably 42%, and still more preferably 44%. The lower limit of Pa may be 46% or 48%. By setting Pa to be not less than the above lower limit, heat generation during overdischarge can be further suppressed. Further, by setting Pa to be not less than the above lower limit, reaction area in the negative electrode active material layer becomes sufficiently large, and output performance and the like tend to improve. The upper limit of Pa can be, for example, 70%, but is preferably 55%. The upper limit of Pc may be 52%, 50%, or 48%. Pa can be within a range obtained by combining any of the above lower limits and any of the above lower limits (provided that the lower limit is smaller than the upper limit). The porosity (Pa) of the negative electrode active material layer may be larger than the porosity (Pc) of the positive electrode active material layer. For example, the porosity (Pa) of the negative electrode active material layer may be larger than the porosity (Pc) of the positive electrode active material layer by not less than 5%. The porosity (Pa) of the negative electrode active material layer can be adjusted by, for example, the particle size of graphite, the pressing pressure on the negative electrode active material layer when producing the negative electrode, and the like.

The lower limit of the thickness (Ta) of the negative electrode active material layer can be, for example, 20 μm, but is preferably 30 μm, and more preferably 32 μm. By setting Ta to be not less than the above lower limit, the energy density per volume of the non-aqueous electrolyte energy storage device can be increased. The upper limit of Ta can be, for example, 60 μm, but is preferably 45 μm, more preferably 40 μm, and still more preferably 36 μm. The upper limit of Ta may be 34 μm. By setting Ta to be not more than the above upper limit, heat generation during overdischarge can be further suppressed. Ta can be within a range obtained by combining any of the above lower limits and any of the above lower limits.

The negative electrode can be produced, for example, by applying a negative electrode mixture paste to the negative electrode substrate directly or via an intermediate layer, and drying the paste. After drying, pressing or the like may be performed as necessary. The negative electrode mixture paste contains respective components constituting the negative electrode active material layer, such as graphite and a binder which is an optional component. The negative electrode mixture paste usually further contains a dispersion medium.

(Regarding X represented by Formula (1))

In the non-aqueous electrolyte energy storage device according to an embodiment of the present invention, X represented by the following formula (1) is not more than 890.

$$X = PcTcTa/Pa \ (1)$$

The upper limit of X may be 885, and may be 850, 800, 750, or 700. When X is not more than the above upper limit, an internal short circuit is likely to occur early during overdischarge, and heat generation tends to be further suppressed. The lower limit of X may be, for example, 300, and may be 400, 500, 600, 700, or 800. When X is not less than the above lower limit, the electrode is unlikely to curve in the electrode manufacturing process (for example, a pressing process), and a high-quality non-aqueous electrolyte energy storage device tends to be obtained. X can be within a range obtained by combining any of the above lower limits and any of the above lower limits (provided that the lower limit is smaller than the upper limit). In a preferred embodiment, X can be not less than 400 and not more than 890, for example, not less than 500 and not more than 890, and typically not less than 600 and not more than 800.

(Separator)

The separator is disposed between the positive electrode and the negative electrode, specifically, between the positive electrode active material layer and the negative electrode active material layer. The positive electrode active material layer and the separator are usually in direct contact with each other. Similarly, the negative electrode active material layer and the separator are usually in direct contact with each other.

As the separator, one having an air resistance of not less than 125 seconds/100 mL can be appropriately selected and used from known separators. As the separator, for example, a separator composed only of a substrate layer, a separator in which a heat-resistant layer containing heat-resistant particles and a binder is formed on one surface or both surfaces of a substrate layer, or the like can be used. Examples of the form of the substrate layer of the separator include a woven fabric, a nonwoven fabric, a porous resin film, and the like. Among these forms, a porous resin film is preferable from the viewpoint of strength. As a material of the substrate layer of the separator, for example, a polyolefin such as polyethylene or polypropylene is preferable from the viewpoint of shutdown function, and for example, polyimide, aramid, or the like is preferable from the viewpoint of resistance to oxidative decomposition. As the substrate layer of the separator, a material obtained by combining these resins may be used.

As the porous resin film used as the separator, a dry separator manufactured by a dry method and a wet separator manufactured by a wet method are known. The separator used in the non-aqueous electrolyte energy storage device according to an embodiment of the present invention may be either a dry separator or a wet separator, but is preferably a dry separator. For example, it may be a dry separator employing dry stretching in which stretching (for example, uniaxial stretching in which a resin film is stretched only in one direction in a process of stretching the resin film at a glass transition temperature or higher to orient molecules) is performed after forming a resin into a film. By manufacturing the separator by a dry method, there is an advantage that the output performance and the like of the non-aqueous electrolyte energy storage device tend to be improved even if a separator having an air resistance of not less than 125 seconds/100 mL is used.

The heat-resistant particles contained in the heat-resistant layer preferably have a mass loss of not more than 5% when the temperature is raised from room temperature to 500°C in an air atmosphere of 1 atmosphere, and more preferably have a mass loss of not more than 5% when the temperature is raised from room temperature to 800°C. Examples of a material having a mass loss not more than a predetermined value include inorganic compounds. Examples of the inorganic compounds include: oxides such as iron oxide, silicon oxide, aluminum oxide, titanium oxide, zirconium oxide, calcium oxide, strontium oxide, barium oxide, magnesium oxide, and aluminosilicate; nitrides such as aluminum nitride and silicon nitride; carbonates such as calcium carbonate; sulfates such as barium sulfate; poorly soluble ionic crystals such as calcium fluoride, barium fluoride, and barium titanate; covalent crystals such as silicon and diamond; and substances derived from mineral resources such as talc, montmorillonite, boehmite, zeolite, apatite, kaolin, mullite, spinel, olivine, sericite, bentonite, and mica, or artificial products thereof, and the like. As the inorganic compound, a single substance or a composite of these substances may be used alone, or two or more of these substances may be used in combination. Among these inorganic compounds, silicon oxide, aluminum oxide, or aluminosilicate is preferable from the viewpoint of safety of the non-aqueous electrolyte energy storage device.

The lower limit of the air resistance of the separator is 125 seconds/100 mL, preferably 132 seconds/100 mL, more preferably 140 seconds/100 mL, and still more preferably 145 seconds/100 mL. Since the air resistance of the separator is not less than the above lower limit, a decrease in ionic conductivity due to compression is unlikely to occur. Therefore, good charge-discharge performance and the like can be exhibited in a non-aqueous electrolyte energy storage device in which graphite is used as a negative electrode active material. The upper limit of the air resistance of the separator is preferably 250 seconds/100 mL, and more preferably 200 seconds/100 mL. When the air resistance of the separator is not more than the above upper limit, an internal short circuit is likely to occur early during overdischarge, and heat generation tends to be further suppressed. The air resistance of the separator can be within a range obtained by combining any of the above lower limits and any of the above lower limits.

The thickness of the separator (when containing a heat-resistant layer, the total thickness of the substrate layer and the heat-resistant layer) is not particularly limited, but the lower limit thereof is preferably 5 μm, and more preferably 8 μm. In some embodiments, the thickness of the separator may be, for example, not less than 12 μm, and typically not less than 15 μm (for example, not less than 18 μm). On the other hand, the upper limit of the thickness is preferably 40 μm, and more preferably 30 μm. In some embodiments, the thickness of the separator may be, for example, not more than 25 μm, and typically not more than 22 μm. When the thickness of the separator is not less than the above lower limit and not more than the above upper limit, the effects described above can be exhibited better. The thickness of the separator can be within a range obtained by combining any of the above lower limits and any of the above lower limits. The "thickness" of the separator refers to an average value of thicknesses measured at arbitrary 10 points of the separator.

(Non-aqueous Electrolyte)

The non-aqueous electrolyte can be appropriately selected from known non-aqueous electrolytes. A non-aqueous electrolytic solution may be used as the non-aqueous electrolyte. The non-aqueous electrolytic solution contains a non-aqueous solvent and an electrolyte salt dissolved in the non-aqueous solvent.

The non-aqueous solvent can be appropriately selected from known non-aqueous solvents. Examples of the non-aqueous solvent include cyclic carbonates, chain carbonates, carboxylic acid esters, phosphoric acid esters, sulfonic acid esters, ethers, amides, nitriles, and the like. As the non-aqueous solvent, those in which a part of hydrogen atoms contained in these compounds is substituted with halogen may be used.

Examples of the cyclic carbonates include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, 1,2-diphenylvinylene carbonate, and the like. Among these, EC is preferable.

Examples of the chain carbonates include diethyl carbonate (DEC), dimethyl carbonate (DMC), ethyl methyl carbonate (EMC), diphenyl carbonate, trifluoroethyl methyl carbonate, bis(trifluoroethyl) carbonate, and the like. Among these, EMC is preferable.

As the non-aqueous solvent, it is preferable to use a cyclic carbonate or a chain carbonate, and it is more preferable to use both a cyclic carbonate and a chain carbonate. By using the cyclic carbonate, dissociation of the electrolyte salt can be promoted to improve the ionic conductivity of the non-aqueous electrolytic solution. By using the chain carbonate, the viscosity of the non-aqueous electrolytic solution can be kept low. When the cyclic carbonate and the chain carbonate are both used, volume ratio of the cyclic carbonate to the chain carbonate (cyclic carbonate:chain carbonate) is preferably, for example, in a range of 5:95 to 50:50.

The electrolyte salt can be appropriately selected from known electrolyte salts. Examples of the electrolyte salt include a lithium salt, a sodium salt, a potassium salt, a magnesium salt, an onium salt, and the like. Among these, a lithium salt is preferable.

Examples of the lithium salt include inorganic lithium salts such as $LiPF_6$, $LiPO_2F_2$, $LiBF_4$, $LiClO_4$, and $LiN(SO_2F)_2$; lithium oxalate salts such as lithium bis(oxalato)borate (LiBOB), lithium difluoro(oxalato)borate (LiFOB), and lithium bis(oxalate)difluorophosphate (LiFOP); and lithium salts having a halogenated hydrocarbon group, such as $LiSO_3CF_3$, $LiN(SO_2CF_3)_2$, $LiN(SO_2C_2F_5)_2$, $LiN(SO_2CF_3)(SO_2C_4F_9)$, $LiC(SO_2CF_3)_3$, and $LiC(SO_2C_2F_5)_3$. Among these, inorganic lithium salts are preferable, and $LiPF_6$ is more preferable.

The content of the electrolyte salt in the non-aqueous electrolytic solution is preferably not less than 0.1 mol/dm$^3$ and not more than 2.5 mol/dm$^3$, more preferably not less than 0.3 mol/dm$^3$ and not more than 2.0 mol/dm$^3$, still more preferably not less than 0.5 mol/dm$^3$ and not more than 1.7 mol/dm$^3$, and particularly preferably not less than 0.7 mol/dm$^3$ and not more than 1.5 mol/dm$^3$, at 20 °C and at 1 atmosphere. By setting the content of the electrolyte salt within the above range, the ionic conductivity of the non-aqueous electrolytic solution can be increased.

The non-aqueous electrolytic solution may contain additives in addition to the non-aqueous solvent and the electrolyte salt. Examples of the additives include: aromatic compounds such as biphenyl, alkylbiphenyl, terphenyl, partially hydrogenated terphenyl, cyclohexylbenzene, t-butylbenzene, t-amylbenzene, diphenyl ether, and dibenzofuran; partially halogenated derivatives of the aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methyl vinylene carbonate, ethyl vinylene carbonate, succinic anhydride, glutaric anhydride, maleic anhydride, citraconic anhydride, glutaconic anhydride, itaconic anhydride, and cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethyl sulfoxide, diethyl sulfoxide, tetramethylene sulfoxide, diphenyl sulfide, 4,4'-bis(2,2-dioxo-1,3,2-dioxathiolane), 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tris(trimethylsilyl) borate, tris(trimethylsilyl) phosphate, and tetrakis(trimethylsilyl) titanate, and the like. One of these additives may be used alone, or two or more of these additives may be used in combination.

The content of the additive contained in the non-aqueous electrolytic solution is preferably not less than 0.01% by mass and not more than 10% by mass, more preferably not less than 0.1% by mass and not more than 7% by mass, still more preferably not less than 0.2% by mass and not more than 5% by mass, and particularly preferably not less than 0.3% by mass and not more than 3% by mass, with respect to the total mass of the non-aqueous electrolytic solution. By setting the content of the additive within the above range, it is possible to improve capacity retention performance or cycle performance after high-temperature storage, or to further improve safety.

As the non-aqueous electrolyte, a solid electrolyte may be used, or both a non-aqueous electrolytic solution and a solid electrolyte may be used.

The solid electrolyte can be selected from any material that has ionic conductivity of lithium, sodium, calcium, or the like and is solid at room temperature (for example, 15°C to 25°C). Examples of the solid electrolyte include sulfide solid electrolytes, oxide solid electrolytes, nitride solid electrolytes, polymer solid electrolytes, and the like.

In the case of a lithium-ion secondary battery, examples of the sulfide solid electrolytes include $Li_2S$-$P_2S_5$, LiI-$Li_2S$-$P_2S_5$, $Li_{10}Ge$-$P_2S_{12}$, and the like.

The shape of the non-aqueous electrolyte energy storage device of the present embodiment is not particularly limited, and examples thereof include a cylindrical battery, a prismatic battery, a flat battery, a coin battery, a button battery, and the like.

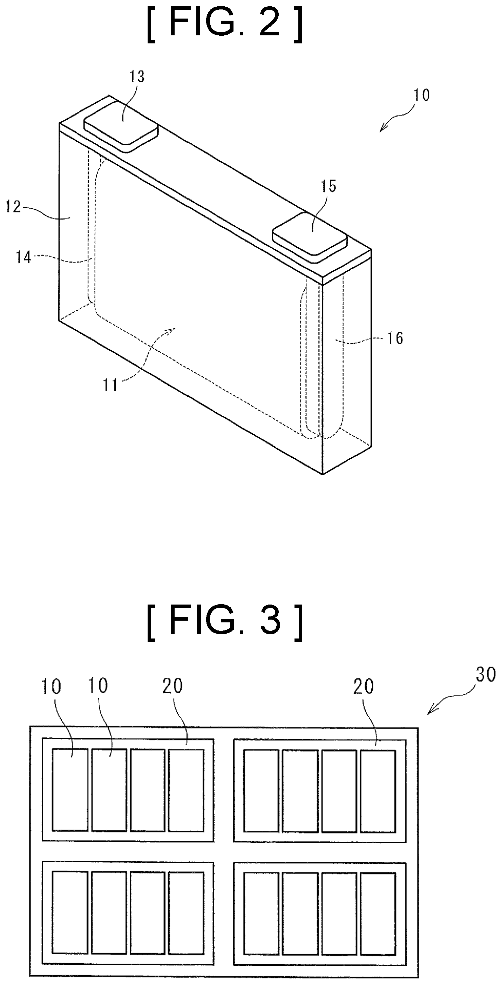

FIG. 2 illustrates a non-aqueous electrolyte energy storage device 10 as an example of a prismatic battery. Note that FIG. 2 is a view in which the inside of a container is seen through. An electrode body 11 having a positive electrode and a negative electrode wound with a separator interposed therebetween is housed in a prismatic container 12. The positive electrode is electrically connected to a positive electrode terminal 13 via a positive electrode lead 14. The negative electrode is electrically connected to a negative electrode terminal 15 via a negative electrode lead 16.


<Energy Storage Apparatus>


The non-aqueous electrolyte energy storage device of the present embodiment can be mounted as an energy storage unit (battery module) configured by assembling a plurality of non-aqueous electrolyte energy storage devices, on a power source for automobiles such as electric vehicles (EV), hybrid vehicles (HEV), and plug-in hybrid vehicles (PHEV), a power source for electronic devices such as personal computers and communication terminals, a power source for power storage, or the like. In this case, the technology of the present invention may be applied to at least one non-aqueous electrolyte energy storage device included in the energy storage unit.

FIG. 3 illustrates an example of an energy storage apparatus 30 configured by further assembling energy storage units 20 in which two or more electrically connected non-aqueous electrolyte energy storage devices 10 are assembled. The energy storage apparatus 30 may include a bus bar (not illustrated) for electrically connecting two or more non-aqueous electrolyte energy storage devices 10, a bus bar (not illustrated) for electrically connecting two or more energy storage units 20, and the like. The energy storage unit 20 or the energy storage apparatus 30 may include a state monitoring apparatus (not illustrated) that monitors the state of one or more non-aqueous electrolyte energy storage devices.

<Method for Manufacturing Non-aqueous Electrolyte Energy Storage Device>

The method for manufacturing the non-aqueous electrolyte energy storage device of the present embodiment can be appropriately selected from known methods. The manufacturing method includes, for example, preparing an electrode body, preparing a non-aqueous electrolyte, and housing the electrode body and the non-aqueous electrolyte in a container. Preparing the electrode body includes preparing a positive electrode and a negative electrode, and forming an electrode body by stacking or winding the positive electrode and the negative electrode with a separator interposed therebetween.

Housing the non-aqueous electrolyte in the container can be appropriately selected from known methods. For example, when a non-aqueous electrolytic solution is used as the non-aqueous electrolyte, the non-aqueous electrolytic solution may be injected from an inlet formed in the container, and then the inlet may be sealed.

<Other Embodiments>

The non-aqueous electrolyte energy storage device of the present invention is not limited to the above embodiment, and various modifications may be made without departing from the gist of the present invention. For example, the configuration of another embodiment may be added to the configuration of one embodiment, or a part of the configuration of one embodiment can be replaced with the configuration of another embodiment or a well-known technology. Furthermore, a part of the configuration of one embodiment can be deleted. In addition, a well-known technique can be added to the configuration of one embodiment.

In the above embodiment, the case in which the non-aqueous electrolyte energy storage device is used as a chargeable and dischargeable non-aqueous electrolyte secondary battery (lithium-ion secondary battery, etc.) has been described, but the type, shape, size, capacity, and the like of the non-aqueous electrolyte energy storage device are arbitrary. The present invention can also be applied to various secondary batteries, and capacitors such as electric double layer capacitors and lithium ion capacitors. Examples

Hereinafter, the present invention will be described more specifically by way of Examples, but the present invention is not limited to the following Examples.

[Example 1]

(Preparation of Positive Electrode)

A positive electrode mixture paste was prepared using $LiNi_{1/3}Mn_{1/3}Co_{1/3}O_2$ as a positive electrode active material, acetylene black (AB) as a conductive agent, polyvinylidene fluoride (PVDF) as a binder, and N-methylpyrrolidone (NMP) as a dispersion medium.

A mass ratio of the positive electrode active material, AB, and PVDF was set to 93:5:2 (in terms of solid content). The positive electrode mixture paste was applied to both surfaces of an aluminum foil having an average thickness of 12.0 μm as a positive electrode substrate, and dried. Thereafter, roll pressing was performed to obtain a positive electrode in which positive electrode active material layers were stacked on both surfaces of the positive electrode substrate. The porosity (Pc) of the formed positive electrode active material layer was 37%, and the thickness (Tc) of one layer was 25.0 μm.

(Preparation of Negative Electrode)

A negative electrode mixture paste was prepared using graphite (Gr) as a negative electrode active material, styrene-butadiene rubber (SBR) as a binder, carboxymethyl cellulose (CMC) as a thickener, and water as a dispersion medium. A mass ratio of the negative electrode active material, SBR, and CMC was set to 98.5:1.0:0.5 (in terms of solid content). The negative electrode mixture paste was applied to both surfaces of a copper foil having an average thickness of 8.0 μm as a negative electrode substrate, and dried. Thereafter, roll pressing was performed to obtain a negative electrode in which negative electrode active material layers were stacked on both surfaces of the negative electrode substrate. The porosity (Pa) of the formed negative electrode active material layer was 45%, and the thickness (Ta) of one layer was 32.0 μm.

(Preparation of Non-aqueous Electrolyte)

LiPF$_6$ was dissolved at a concentration of 1.0 mol/dm$^3$ in a mixed solvent of ethylene carbonate (EC), dimethyl carbonate (DMC), and ethyl methyl carbonate (EMC) at a volume ratio of 30:35:35, thereby obtaining a non-aqueous electrolyte.

(Preparation of Separator)

As the separator, a polyolefin microporous membrane manufactured by a dry method and having an air resistance of 180 seconds/100 mL and a thickness of 18 μm was used.

(Assembly of Non-aqueous Electrolyte Energy Storage Device)

A wound-type electrode body was obtained by using the above positive electrode, negative electrode, and separator. The electrode body was housed in a rectangular prismatic container, and the non-aqueous electrolyte was injected and sealed to obtain a non-aqueous electrolyte energy storage device of Example 1.

[Examples 2 to 4, Comparative Examples 1 to 3, Reference Examples 1 to 5]

Non-aqueous electrolyte energy storage devices of Examples 2 to 4, Comparative Examples 1 to 3, and Reference Examples 1 to 5 were obtained in the same manner as in Example 1 except that the porosity and thickness of the positive electrode active material layer and the negative electrode active material layer, the type of the negative electrode active material, and the air resistance of the separator were set as illustrated in Table 1. For the separators of Examples 1 to 4 and Comparative Examples 1 to 3, polyolefin microporous membranes manufactured by a dry method were used. For the separators of Reference Examples 1 to 5, polyolefin microporous membranes manufactured by a wet method were used. The porosity of the positive electrode active material layer and the negative electrode active material layer was adjusted by the pressure during roll pressing. In Table 1, "Gr" indicates graphite and "HC" indicates non-graphitizable carbon. Table 1 also illustrates the value of PcTcTa/Pa in each non-aqueous electrolyte energy storage device.

(Evaluation of Curvature)

A curvature amount was measured for the positive electrode of each example under the following conditions. First, a positive electrode before roll pressing was prepared, cut out to a width of 103 mm and a length of 2 m, subjected to roll pressing so that the porosity (Pc) and the thickness (Tc) of one layer of the positive electrode active material layer were set to predetermined values, and then vacuum-dried in a vacuum dryer at 90°C for 12 hours. After vacuum drying, the cut positive electrode was placed such that the longitudinal direction of a 5 m straight metal ruler was substantially parallel to the longitudinal direction of the positive electrode, and one end (corner) and the other end (corner) of the positive electrode in the longitudinal direction were brought into contact with the metal ruler. At a position 1 m from one end of the positive electrode in the longitudinal direction (i.e., a central portion of the positive electrode in the longitudinal direction), the maximum distance of a gap from an edge of the positive electrode along the longitudinal direction to an edge of the metal ruler along the longitudinal direction, in a direction perpendicular to the edge of the metal ruler along the longitudinal direction, was measured as the curvature amount. Here, a case in which the curvature amount was not more than 10 mm was evaluated as A, and a case in which the curvature amount exceeded 10 mm was evaluated as B. The results are illustrated in Table 1.

(Initial Charge and Discharge)

Initial charge and discharge were performed on each of the obtained non-aqueous electrolyte energy storage devices under the following conditions. Constant current charge was performed at a charge current of 1.0 C with a charge cutoff voltage of 4.10 V in a constant-temperature bath at 25°C, and then constant voltage charge was performed at 4.10 V. The condition for terminating the charge was set such that the total charge time reached 3 hours. Thereafter, a rest period of 10 minutes was provided. Constant current discharge was performed at a discharge current of 1.0 C with a discharge cutoff voltage of 3.0 V. Two cycles were performed with these charging and discharging steps as one cycle. The amount of discharge in the second cycle was defined as the discharge capacity.

(Overdischarge Test)

Next, each non-aqueous electrolyte energy storage device was overdischarged from a discharged state of SOC 0% to an SOC of -35% by constant current discharge at a discharge current of 1.0 C in a temperature environment of 25°C. Note that SOC was based on the discharge capacity in the initial charge and discharge, a state where the discharge in the second cycle in the initial charge and discharge was completed was defined as a discharged state of SOC 0%, and a state where the same amount of electricity as the discharge capacity was charged from this state was defined as SO 100%. In this overdischarge test, the temperature at the center of a long side surface of the outer surface of the container of each non-aqueous electrolyte energy storage device was measured, and a case in which heat generation of 140°C or higher did not occur was evaluated as A, and a case in which heat generation of 140°C or higher occurred was evaluated as B. The results are illustrated in Table 1.

[Table 1]

| | Positive Electrode Active Material Layer | | Negative Electrode Active Material Layer | | | PcTcTa/Pa | Separator | Overdischarge Test | Curvature |
|---|---|---|---|---|---|---|---|---|---|
| | Porosity Pc (%) | Thickness Tc (μm) | Negative Electrode Active Material Type | Porosity Pa (%) | Thickness Ta (μm) | | Air Resistance (s/100mL) | | |
| Example 1 | 37 | 25.0 | Gr | 45 | 32.0 | 658 | 180 | A | A |
| Example 2 | 42 | 30.0 | Gr | 50 | 35.0 | 882 | 180 | A | A |
| Example 3 | 42 | 30.0 | Gr | 47 | 33.3 | 885 | 150 | A | A |
| Example 4 | 36 | 21.0 | Gr | 48 | 31.0 | 488 | 170 | A | B |
| Comparative Example 1 | 42 | 30.0 | Gr | 45 | 32.0 | 896 | 180 | B | A |
| Comparative Example 2 | 47 | 27.5 | Gr | 45 | 32.0 | 919 | 180 | B | A |
| Comparative Example 3 | 42 | 30.0 | Gr | 40 | 29.5 | 929 | 180 | B | A |
| Reference Example 1 | 42 | 30.0 | Gr | 45 | 32.0 | 896 | 60 | A | A |
| Reference Example 2 | 42 | 30.0 | Gr | 45 | 32.0 | 896 | 100 | A | A |
| Reference Example 3 | 42 | 34.5 | HC | 30 | 35.0 | 1,691 | 100 | A | A |
| Reference Example 4 | 39 | 33.0 | HC | 30 | 35.0 | 1,502 | 100 | A | A |
| Reference Example 5 | 42 | 34.5 | HC | 33 | 36.5 | 1,603 | 100 | A | A |

As illustrated in Table 1, in each of the non-aqueous electrolyte energy storage devices of Comparative Examples 1 to 3 in which graphite was used as the negative electrode active material, a separator having an air resistance of not less than 125 seconds/100 mL was used, and the value of PcTcTa/Pa exceeded 890, heat generation of 140°C or higher occurred in the overdischarge test. On the other hand, in each of the non-aqueous electrolyte energy storage devices of Examples 1 to 4 in which graphite was used as the negative electrode active material, a separator having an air resistance of not less than 125 seconds/100 mL was used, and the value of PcTcTa/Pa was not more than 890, heat generation of 140°C or higher did not occur in the overdischarge test. Further, it was confirmed that in each of the non-aqueous electrolyte energy storage devices of Examples 1 to 3 in which the value of PcTcTa/Pa was not less than 500 and not more than 890, a high-quality non-aqueous electrolyte energy storage device in which curvature of the electrode was suppressed could be obtained.

Note that in each of the non-aqueous electrolyte energy storage devices of Reference Examples 1 to 5 in which a separator having an air resistance of less than 125 seconds/100 mL was used, heat generation of 140°C or higher did not occur in the overdischarge test regardless of whether the negative electrode active material was graphite or non-graphitizable carbon. It was confirmed that heat generation of 140°C or higher during the overdischarge test is a phenomenon that particularly becomes apparent in a non-aqueous electrolyte energy storage device in which graphite is used as a negative electrode active material and a separator having an air resistance of not less than 125 seconds/100 mL is used.

INDUSTRIAL APPLICABILITY

The present invention can be applied to a non-aqueous electrolyte energy storage device and the like used as a power source for electronic devices such as personal computers and communication terminals, automobiles, and the like.

DESCRIPTION OF REFERENCE NUMERALS

1 Positive electrode
2 Negative electrode
3 Separator
4 Positive electrode substrate
5 Positive electrode active material layer
6 Negative electrode substrate
7 Negative electrode active material layer
8 Metal ion
9 Metal
10 Non-aqueous electrolyte energy storage device
11 Electrode body
12 Container
13 Positive electrode terminal
14 Positive electrode lead
15 Negative electrode terminal
16 Negative electrode lead
20 Energy storage unit
30 Energy storage apparatus

**Claims**

1. A non-aqueous electrolyte energy storage device comprising:

   a positive electrode having a positive electrode active material layer;
   a negative electrode having a metal negative electrode substrate and a negative electrode active material layer containing graphite; and
   a separator disposed between the positive electrode active material layer and the negative electrode active material layer,
   wherein the separator has an air resistance of not less than 125 seconds/100 mL, and X represented by the following formula (1) is not more than 890:

$$X = PcTcTa/Pa \ (1)$$

where Pc is a porosity (%) of the positive electrode active material layer; Tc is a thickness ($\mu$m) of the positive electrode active material layer; Pa is a porosity (%) of the negative electrode active material layer; and Ta is a thickness ($\mu$m) of the negative electrode active material layer.

2.  The non-aqueous electrolyte energy storage device according to claim 1, wherein

    the Pc is not less than 30% and not more than 45%,
    the Tc is not less than 20 $\mu$m and not more than 35 $\mu$m,
    the Pa is not less than 40% and not more than 55%, and
    the Ta is not less than 30 $\mu$m and not more than 45 $\mu$m.

3.  The non-aqueous electrolyte energy storage device according to claim 1 or 2,
    wherein the separator has an air resistance of not less than 140 seconds/100 mL.

4.  The non-aqueous electrolyte energy storage device according to claim 1 or 2,
    wherein the X is not less than 500 and not more than 890.

$$X = PcTcTa/Pa \ (1)$$

# [ FIG. 1A ]

# [ FIG. 1B ]

# [ FIG. 1C ]

# [ FIG. 2 ]

# [ FIG. 3 ]

## INTERNATIONAL SEARCH REPORT

| International application No. |
| --- |
| **PCT/JP2024/030245** |

### A.    CLASSIFICATION OF SUBJECT MATTER

*H01M 10/0525*(2010.01)i; *H01G 11/26*(2013.01)i; *H01G 11/52*(2013.01)i; *H01M 4/13*(2010.01)i; *H01M 4/133*(2010.01)i; *H01M 50/491*(2021.01)i

FI:    H01M10/0525; H01G11/26; H01G11/52; H01M4/13; H01M4/133; H01M50/491

According to International Patent Classification (IPC) or to both national classification and IPC

### B.    FIELDS SEARCHED

Minimum documentation searched (classification system followed by classification symbols)

H01M10/05-10/0587; H01G11/00-11/87; H01M4/00-4/62; H01M50/40-50/497

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
| --- | --- | --- |
| A | JP 2019-029232 A (SUMITOMO CHEMICAL COMPANY, LIMITED) 21 February 2019 (2019-02-21) | 1-4 |
| A | JP 2003-303625 A (JAPAN STORAGE BATTERY CO., LTD.) 24 October 2003 (2003-10-24) | 1-4 |
| A | JP 2003-151635 A (JAPAN STORAGE BATTERY CO., LTD.) 23 May 2003 (2003-05-23) | 1-4 |

☐ Further documents are listed in the continuation of Box C.      ☑ See patent family annex.

| | |
| --- | --- |
| *    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| **30 October 2024** | **19 November 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

INTERNATIONAL SEARCH REPORT
Information on patent family members

International application No.

**PCT/JP2024/030245**

| Patent document cited in search report | | | Publication date (day/month/year) | Patent family member(s) | Publication date (day/month/year) |
|---|---|---|---|---|---|
| JP | 2019-029232 | A | 21 February 2019 | (Family: none) | |
| JP | 2003-303625 | A | 24 October 2003 | (Family: none) | |
| JP | 2003-151635 | A | 23 May 2003 | (Family: none) | |

Form PCT/ISA/210 (patent family annex) (July 2022)

**REFERENCES CITED IN THE DESCRIPTION**

**Patent documents cited in the description**

- JP 2005222933 A
- JP 2017069039 A